# EUROPÄISCHE PATENTSCHRIFT

(11) **EP 1 504 948 B1**
(45) Veröffentlichungstag und Bekanntmachung des Hinweises auf die Patenterteilung: **30.01.2008**
(21) Anmeldenummer: 04017288.4
(22) Anmeldetag: 22.07.2004
(51) Int. Cl.: B60K 31/00

(54) **Vorrichtung zur adaptiven Geschwindigkeitsregelung für Kraftfahrzeuge**
Adaptive cruise control device for motor vehicles
Dispositif de regulation adaptable de la vitesse de vehicules

(30) Priorität: 07.08.2003 DE 10336331
(43) Veröffentlichungstag der Anmeldung: 09.02.2005
(73) Patentinhaber: ROBERT BOSCH GMBH, 70442 Stuttgart (DE)
(72) Erfinder: Michi, Harald, 75248 Oelbronn-Duerrn (DE); Kussmann, Holger, 31180 Giesen (DE); Egelhaaf, Jan, 71229 Leonberg (DE); Placke, Lars, 30163 Hannover (DE)

(56) Entgegenhaltungen:
- EP-A- 0 798 150
- EP-A- 0 890 470
- DE-A1- 4 133 882
- DE-A1- 19 627 727
- REHSCHE M: "LA CONDUITE SERA DE PLUS EN PLUS ASSISTEE LES TECHNIQUES DE DEMAIN DERRIERE LES COULISSES DE FORD" REVUE AUTOMOBILE, HALLWAG S.A. BERNE, CH, Bd. 89, Nr. 1, 6. Januar 1994 (1994-01-06), Seite 15, XP000406806 ISSN: 0035-0761
- PATENT ABSTRACTS OF JAPAN Bd. 2002, Nr. 02, 2. April 2002 (2002-04-02) & JP 2001 270344 A (NISSAN MOTOR CO LTD), 2. Oktober 2001 (2001-10-02)
- IOANNOU P ET AL: "Intelligent cruise control: theory and experiment" PROCEEDINGS OF THE CONFERENCE ON DECISION AND CONTROL. SAN ANTONIO, DEC. 15 - 17, 1993, NEW YORK, IEEE, US, Bd. VOL. 3 CONF. 32, 15. Dezember 1993 (1993-12-15), Seiten 1885-1890, XP010116579 ISBN: 0-7803-1298-8

## Beschreibung

### Stand der Technik

Die Erfindung betrifft eine Vorrichtung zur adapitven Geschwindigkeitsregelung für Kraftfahrzeuge, mit einem Ortungssystem zur Ortung vorausfahrender Fahrzeuge und einem Regler zur Regelung der Geschwindigkeit auf eine Richtgeschwindigkeit oder auf einen Sollabstand zu einem vorausfahrenden Fahrzeug.

Für Kraftfahrzeuge sind seit langem Geschwindigkeitsregler bekannt, mit denen die Geschwindigkeit automatisch auf eine vom Fahrer gewählte Richtgeschwindigkeit geregelt werden kann. Bei Annäherung an eine langsameres vorausfahrendes Fahrzeug muß der Fahrer des geregelten Fahrzeugs entweder die Geschwindigkeitsregelung abschalten oder die Richtgeschwindigkeit senken, um den Sicherheitsabstand zu dem vorausfahrenden Fahrzeug einzuhalten.

Einen erhöhten Komfort bieten sogenannte adaptive Geschwindigkeitsregelsysteme (ACC; Adptive Cruise Control), die bei Annäherung an das vorausfahrende Fahrzeug automatisch die Geschwindigkeit des geregelten Fahrzeugs anpassen. Zu diesem Zweck weisen die bekannten ACC-Systeme ein Ortungssystem, beispielsweise einen Radarsensor auf, mit dem die vorausfahrenden Fahrzeuge geortet und deren Abstände und Relativgeschwindigkeiten gemessen werden. Wenn ein oder mehrere langsamere vorausfahrende Fahrzeuge auf der eigenen Fahrspur geortet werden, so wird das unmittelbar vorausfahrende Fahrzeug, also das mit dem geringsten Abstand, automatisch als Zielobjekt ausgewählt, und die Geschwindigkeit des eigenen Fahrzeugs wird automatisch so angepaßt, daß das vorausfahrende Fahrzeug in einem angemessenen Sicherheitsabstand, dem Sollabstand, verfolgt wird. Dieser Sollabstand ist üblicherweise geschwindigkeitsabhängig und wird z. B. über eine Zeitlücke definiert, d. h., über den zeitlichen Abstand, in dem die beiden Fahrzeuge denselben Punkt auf der Fahrbahn passieren.

Bei dieser Abstandsregelung bildet bei den bekannten Systemen die Richtgeschwindigkeit die obere Geschwindigkeitsgrenze. Wenn das Zielobjekt über diese Richtgeschwindigkeit hinaus beschleunigt, so wird die Abstandsregelung automatisch ausgesetzt und wieder zu einer Regelung auf die Richtgeschwindigkeit übergegangen. Falls der Fahrer des eigenen Fahrzeugs nun seinerseits schneller fahren möchte, muß er aktiv in das System eingreifen, um die Richtgeschwindigkeit zu erhöhen, beispielsweise durch Betätigung einer "Plus"-Taste eines Bedienelements für das ACC-System, oder durch vorübergehende Betätigung des Gaspedals und Betätigen einer "Set"-Taste, mit der die in diesem Augenblick erreichte Ist-Geschwindigkeit als Richtgeschwindigkeit gesetzt wird.

Aus dem Artikel "La conduite sera de plus en plus assistée" von Michael Rehsche, erschienen in der Revue Automobil am 06.01.1994 ist ein Radarsensor bekannt, der ein damit ausgerüstetes Fahrzeug hinter einem vorherfahrenden Fahrzeug in konstantem Abstand folgt.

Aus der EP 0 798 150 A2 ist eine Vorrichtung gemäß dem Oberbegriff des Anspruchs 1 bekannt.

Aus der EP 0 890 470 A2 ist ein Fahrzeugsteuerungssystem zum selbständigen Steuern eines Fahrzeugs bekannt, um einem vorausfahrenden Fahrzeug nachfahrend zu folgen. Mittels eines Fahrzeug- zu Fahrzeugabstandsdetektors zum Erfassen des Abstands von dem eigenen Fahrzeug zu einem vorausfahrenden Fahrzeug, mittels eines Lenkwinkeldetektors zum Erfassen eines Lenkwinkels des eigenen Fahrzeugs sowie mittels eines Fahrgeschwindigkeitsdetektors zum Erfassen einer Fahrgeschwindigkeit des eigenen Fahrzeugs sowie einem Drehradiusrechner zum Berechnen des Radius einer Drehung, die das eigene Fahrzeug durchführt auf der Basis des erfassten Lenkwinkels und der erfassten Fahrgeschwindigkeit, wird die Wahrscheinlichkeit ausgewertet, dass das vorausfahrende Fahrzeug in der Fahrbahn des eigenen Fahrzeugs fährt.

Aus der DE 41 33 882 A1 ist ein Verfahren zum selbsttätigen Nachführen eines Fahrzeugs auf der Spur eines vorausfahrenden Fahrzeugs bekannt, wobei signifikante Heckbereiche des Führungsfahrzeugs mittels einer Fernsehkamera bildmäßig erfasst werden und durch Bildauswertung der Seitenversatz des Führungsfahrzeugs zur Längsrichtung des Fahrzeugs sowie der Abstand zwischen den Fahrzeugen ermittelt und daraus der erforderliche Lenkwinkel des Fahrzeugs berechnet wird.

### Vorteile der Erfindung

Die Erfindung mit den in Anspruch 1 angegebenen Merkmalen bietet den Vorteil, daß die Funktionalität des ACC-Systems erweitert und somit der Komfort für den Fahrer weiter gesteigert wird.

Zu diesem Zweck ist erfindungsgemäß eine Folgefunktion vorgesehen, die bewirkt, daß das Zielobjekt auch bei Überschreitung der Richtgeschwindigkeit automatisch weiter verfolgt wird. In dieser Funktion wird somit die Abstandsregelung bzw. die Regelung auf die Zeitlücke auch dann automatisch fortgesetzt, wenn dazu die Geschwindigkeit des eigenen Fahrzeugs vorübergehend oder dauernd über die bisher eingestellte Richtgeschwindigkeit hinaus vergrößert werden muß.

Wenn z. B. der Fahrer bei höherem Verkehrsaufkommen auf einer Autobahn den Wunsch hat, sich an ein vorausfahrendes Fahrzeug "anzuhängen" und jeweils so schnell zu fahren, wie es das vordere Fahrzeug zuläßt, so braucht er nur einmal die Folgefunktion zu aktivieren, und er braucht sich dann nicht mehr um die Einstellung oder Anpassung einer Richtgeschwindigkeit zu kümmern. Besonders vorteilhaft ist dies z.B. in einer Situation, in der der Fahrer auf eine Autobahn auffährt, auf der verhältnismäßig zähflüssiger Verkehr herrscht, so daß der Fahrer zunächst nicht die Möglichkeit hat, auf die eigentlich gewünschte Richtgeschwindigkeit zu beschleunigen und dann durch Betätigen der "Set-Taste" diese Geschwindigkeit zu speichern. Wenn der Fahrer dann die Folgefunktion aktiviert und später der Verkehr wieder flüssiger wird, so wird die Geschwindigkeit des Fahrzeugs automatisch an den fließenden Verkehr angepaßt, ohne daß noch ein Eingriff des Fahrers erforderlich ist.

Zweckmäßige Ausgestaltungen und Weiterbildungen der Erfindung sind in den Unteransprüchen angegeben.

Die herkömmlichen ACC-Systeme sind generell für Fahrten auf Autobahnen oder gut ausgebauten Landstraßen vorgesehen und lassen sich deshalb generell nur oberhalb einer bestimmten Mindestgeschwindigkeit von beispielsweise 40 oder 50 km/h aktivieren. Es sind jedoch Systeme vorgeschlagen worden, die darüber hinaus eine sogenannte LSF-Funktion (Low Speed Following) aufweisen, die beispielsweise bei einem Verkehrsstau eine Fortsetzung der Abstandsregelung im unteren Geschwindigkeitsbereich, bis hin zur Geschwindigkeit 0 ermöglicht. Im Rahmen dieser Funktion ist z.B. vorgesehen, daß das eigene Fahrzeug beim Auffahren auf ein Stauende erforderlichenfalls automatisch in den Stand gebremst wird und dann ggf. auch automatisch wieder anfährt, wenn sich das vordere Fahrzeug wieder in Bewegung setzt. Ein wesentlicher Unterschied zwischen der LSF-Funktion und der ACC-Funktion besteht darin, daß im LSF-Betrieb auch stehende Hindernisse berücksichtigt werden müssen, während im ACC-Betrieb, bei höheren Geschwindigkeiten, normalerweise davon ausgegangen wird, daß sich keine stehenden Hindernisse auf der Fahrbahn befinden und deshalb Standziele, die vom Ortungssystem geortet werden, bei der Regelung unberücksichtigt bleiben. Da die Erkennung stehender Hindernisse und die Diskriminierung von Scheinhindernissen wie Kanaldeckeln auf der Fahrbahn oder sonstigen irrelevanten Radarzielen mit mehr oder minder großen Unsicherheiten behaftet ist, je nach Umfang der zur Verfügung stehenden Ortungssensorik, und da die Fehlinterpretation von Standzielen zu Fehlreaktionen und bei höherer Geschwindigkeit unter Umständen zu Gefahrensituationen führen könnte, sind im LSF-Betrieb bisher nur verhältnismäßig niedrige Richtgeschwindigkeiten zulässig.

In diesem Zusammenhang bietet die Erfindung die vorteilhafte Möglichkeit, in den Fällen, in denen die Folgefunktion aktiv ist, automatisch in Abhängigkeit von der jeweiligen Geschwindigkeit zwischen den verschiedenen Betriebsarten umzuschalten, so daß der Fahrer nicht in das System einzugreifen braucht, um einen Wechsel des Betriebsmodus und, im Zusammenhang damit, eine Anpassung der Richtgeschwindigkeit zu veranlassen.

Wenn eine aufwendigere Sensorik zur Erfassung des Verkehrsumfeldes zur Verfügung steht, kann die Folgefunktion auch im Stadtverkehr nutzbar gemacht werden. Dies eröffnet dem Fahrer die vorteilhafte Möglichkeit, sich über eine große Bandbreite unterschiedlicher Verkehrssituationen und Geschwindigkeitsprofile hinweg, vom Stadtverkehr über Landstraßen bis hin zu Autobahnen, an ein vorderes Fahrzeug anzuhängen und dieses zu verfolgen.

Selbstverständlich besteht auch bei dem erfindungsgemäßen System die Möglichkeit, eine Richtgeschwindigkeit vorzugeben. Hinsichtlich der Behandlung dieser Richtgeschwindigkeit im Rahmen der Folgefunktion sind dann verschiedene Varianten möglich. Zum Beispiel ist es denkbar, daß die bisherige Richtgeschwindigkeit bei Aktivierung der Folgefunktion gelöscht wird, so daß das eigene Fahrzeug beim Verfolgen des vorderen Fahrzeugs ggf. bis zur Höchstgeschwindigkeit beschleunigen kann. Wenn der Fahrer dann in üblicher Weise eine neue Richtgeschwindigkeit wählt, wird damit die Folgefunktion automatisch deaktiviert. Gemäß einer anderen Variante kann die ursprünglich vom Fahrer gewählte Richtgeschwindigkeit stetig oder schrittweise an die Geschwindigkeit des vorausfahrenden Fahrzeugs angepaßt werden..Wenn dann das vordere Fahrzeug beschleunigt und die bisher gewählte Richtgeschwindigkeit dazu führen würde, daß sich die Zeitlücke über den Sollwert hinaus vergrößert, so wird die Richtgeschwindigkeit im Regler automatisch um beispielsweise 5 km/h vergrößert, so daß wieder genügend Spielraum besteht, das Zielobjekt zu verfolgen. Dieser Vorgang kann sich dann ggf. mehrfach wiederholen, wenn das vordere Fahrzeug weiter beschleunigt. Wahlweise kann die Richtgeschwindigkeit auch wieder reduziert werden, wenn das vordere Fahrzeug wieder langsamer wird. Die Anpassung der Richtgeschwindigkeit kann dabei jeweils mit einer gewissen Zeitverzögerung oder in Abhängigkeit von einer über einen bestimmten Zeitraum gemittelten Geschwindigkeit des vorderen Fahrzeugs erfolgen, so daß bei unstetiger Fahrweise des Fahrers des vorderen Fahrzeugs unnötige Geschwindigkeitsfluktuationen vermieden werden.

Ebenso ist es denkbar, daß die ursprünglich vom Fahrer gewählte Richtgeschwindigkeit gespeichert bleibt, so daß der Fahrer die Möglichkeit hat, durch Betätigung einer "Resume"-Taste, wieder zu der ursprünglichen Richtgeschwindigkeit zurückzukehren.

Auch hinsichtlich des Systemverhaltens bei einem Wechsel oder einem vorübergehenden Verlust des Zielobjektes sind unterschiedliche Varianten oder Betriebsmodi denkbar. Beispielsweise kann bei einem Wechsel des Zielobjektes, etwa bei einem Spurwechsel des vorderen Fahrzeugs oder auch des eigenen Fahrzeugs, die Folgefunktion automatisch fortgesetzt werden, so daß nun das neue Zielobjekt verfolgt wird. Alternativ kann bei einem Wechsel des Zielobjektes die Folgefunktion deaktiviert werden. Bei Deaktivierung der Folgefunktion infolge eines Zielobjektwechsels oder Zielobjektverlustes kann je nach Ausführungsformen oder Betriebsmodus die aktuelle Richtgeschwindigkeit beibehalten oder wieder zu der ursprünglich vom Fahrer gewählten Richtgeschwindigkeit zurückgekehrt werden.

Sofern eine hinreichend komplexe Ortungssensorik zur Verfügung steht, so daß vorausfahrende Fahrzeuge individuell anhand charakteristischer Merkmale erkannt werden können, besteht auch die Möglichkeit, das einmal ausgewählte zielobjekt fortgesetzt, auch bei Spurwechseln, zu verfolgen. Dies ist besonders zweckmäßig bei Fahrten im Konvoi oder in den Fällen, in denen ein ortskundiger "Lotse" verfolgt werden soll. Falls ein bildverarbeitendes System verfügbar ist, kann die Auswahl des zu verfolgenden Zielobjekt beispielsweise auch dadurch erfolgen, daß der Fahrer dieses Zielobjekt auf einem Bilschirm markiert.

Die erfindungsgemäße Folgefunktion kann unmittelbar in der Hardware oder Software eines ACC-Systems implementiert sein, sie kann jedoch auch Bestandteil eines anderen Systems sein, das dem ACC-System die jeweils geeigneten Richtgeschwindigkeiten vorgibt.

### Zeichnung

Ein Ausführungsbeispiel der Erfindung ist in den Zeichnungen dargestellt und in der nachfolgenden Beschreibung näher erläutert.

Es zeigen:
Figur 1 ein Blockdiagramm der erfindungsgemäßen Vorrichtung;
Figur 2 ein Diagramm einer Verkehrssituation zur Illustration der Arbeitsweise der Vorrichtung; und
Figur 3 ein Geschwindigkeits/Zeit-Diagramm zur Erläuterung der Arbeitsweise der Vorrichtung.

### Beschreibung des Ausführungsbeispiels

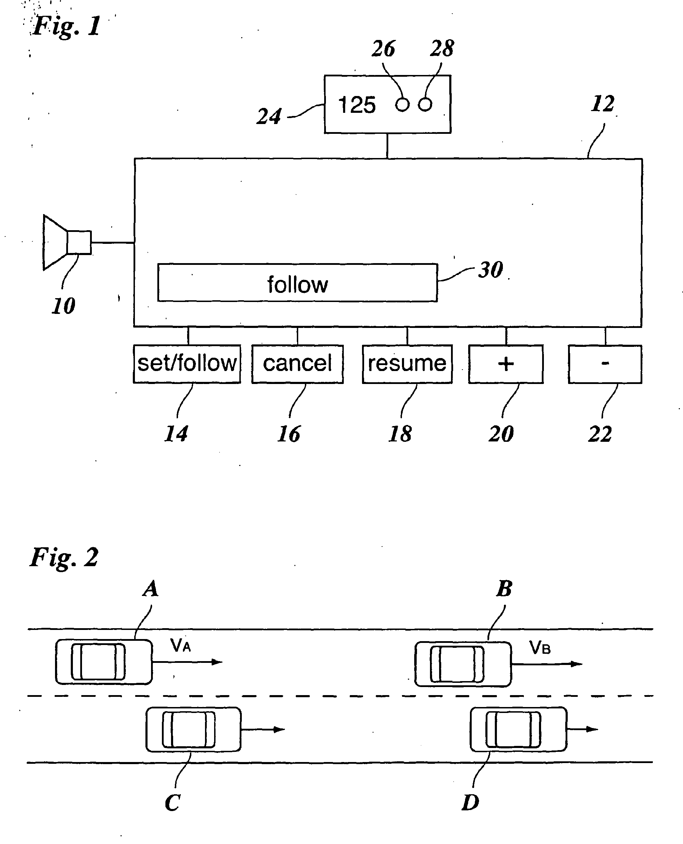

In Figur 1 ist eine Vorrichtung zur adaptiven Geschwindigkeitsregelung für Kraftfahrzeuge in der Form eines vereinfachten Blockdiagramms dargestellt. Die Vorrichtung umfaßt ein Ortungssystem 10, beispielsweise einen vorn am Fahrzeug eingebauten Radarsensor, mit dem vorausfahrende Fahrzeuge geortet und deren Abstände und Relativgeschwindigkeiten gemessen werden, sowie einen Regler 12, der beispielsweise durch einen oder mehrere geeignet programmierte Mikroprozessoren gebildet wird und die bekannten Funktionen eines ACC-Systems ausführt. Zur Bedienung des Systems sind mehrere Tasten 14, 16, 18, 20 und 22 vorgesehen, die üblicherweise in einen Multifunktionshebel am Lenkrad des Fahrzeugs integriert sind. Diese Tasten haben zunächst die von einem herkömmlichen ACC-System bekannten Funktionen.

Die Betätigung einer Taste 14 (Set) bewirkt, daß die aktuelle Geschwindigkeit des Fahrzeugs als Richtgeschwindigkeit gespeichert und der Regelung zugrundegelegt wird. Wenn dann das Ortungssystem 10 ein langsames vorausfahrendes Fahrzeug ortet, so wird die Geschwindigkeit im Rahmen einer Abstandsregelung gedrosselt. Wenn das vordere Fahrzeug die Spur verläßt oder über die eingestellte Richtgeschwindigkeit hinaus beschleunigt, so wird die Regelung auf die Richtgeschwindigkeit wieder aufgenommen.

Mit einer Taste 16 (Cancel) werden die Abstands- und Geschwindigkeitsregelfunktionen ausgesetzt. Die Richtgeschwindigkeit bleibt jedoch gespeichert. Die gleiche Funktion hat auch die Betätigung des Bremspedals des Fahrzeugs oder, bei Fahrzeugen mit Handschaltgetriebe, die Betätigung der Kupplung.

Mit einer Taste 18 (Resume) kann die Regelung auf die gespeicherte Richtgeschwindigkeit wieder aufgenommen werden, wenn die Regelung zuvor ausgesetzt war.

Eine Taste 20 (+) dient dazu, die gespeicherte Richtgeschwindigkeit schrittweise zu erhöhen. Entsprechend kann mit einer Taste 22 (-) die Richtgeschwindigkeit schrittweise verringert werden.

Auf einer Anzeigeeinrichtung 24, im gezeigten Beispiel einer digitalen Anzeigevorrichtung, wird dem Fahrer die jeweils gültige Richtgeschwindigkeit angezeigt (im gezeigten Beispiel 125 km/h).

Die Anzeigeeinrichtung 24 weist im gezeigten Beispiel außerdem zwei Anzeigelampen 26 und 28 auf, mit denen zusätzliche Informationen über den Zustand des Systems angezeigt werden. Das Aufleuchten der Anzeigelampe 26 bedeutet, daß ein Zielobjekt vom Ortungssystem 10 geortet und im Regler 12 ausgewählt wurde. Unter diesen Bedingungen kann vom Fahrer eine Folgefunktion 30 aktiviert werden, die im Regler 12 implementiert ist. Diese Folgefunktion bewirkt, daß das ausgewählte Zielobjekt unabhängig von der gewählten Richtgeschwindigkeit verfolgt wird. Abweichend von der normalen ACC-Funktion, wird die Verfolgung des Zielobjektes also auch dann fortgesetzt, wenn dazu die bisherige Richtgeschwindigkeit überschritten werden muß. Die Anzeigelampe 28 zeigt an, ob die Folgefunktion 30 aktiv ist oder nicht.

Zum Aktivieren der Folgefunktion 30 kann eine besondere Taste vorgesehen sein. Im gezeigten Beispiel wird diese Funktion jedoch dadurch aktiviert, daß die Taste 14 (Set/Follow) zweimal kurz hintereinander betätigt wird.

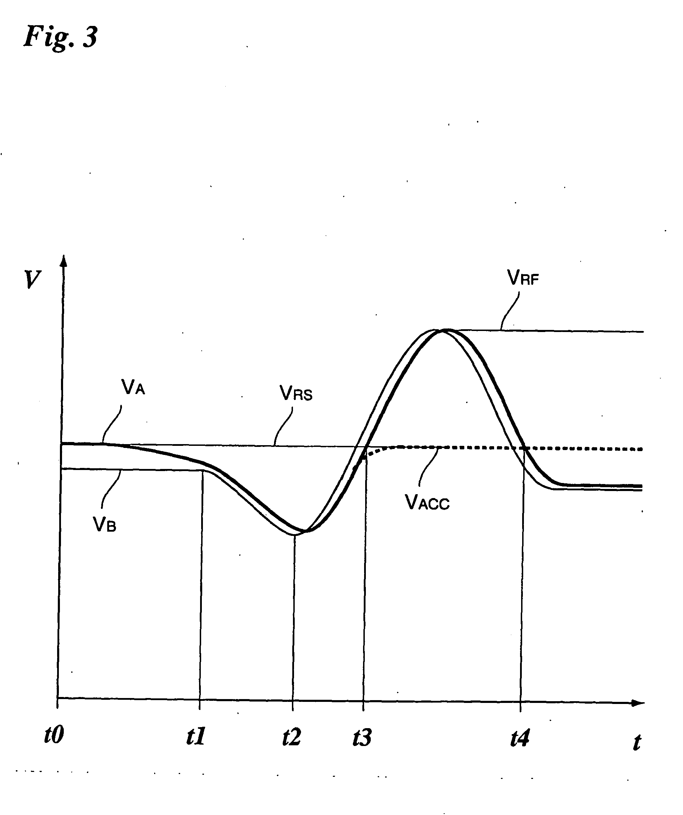

Die Wirkungsweise der Folgefunktion soll anhand von Figuren 2 und 3 näher erläutert werden. In Figur 2 ist ein Fahrzeug A dargestellt, das mit dem adaptiven Geschwindigkeitsregelsystem nach Figur 1 ausgerüstet ist. Ein vorausfahrendes Fahrzeug B ist als Zielobjekt ausgewählt. Die Folgefunktion 30 ist aktiv und bewirkt, wie im Prinzip auch die herkömmliche Abstandsregelfunktion, daß die Geschwindigkeit V_{A} des Fahrzeugs A an die Geschwindigkeit V_{B} des vorderen Fahrzeugs B angepaßt wird. Zwei auf der rechten Spur fahrende Fahrzeuge C und D werden gerade von den Fahrzeugen A und B überholt. Die Geschwindigkeiten der Fahrzeuge sind durch die Längen der Pfeile in Figur 2 symbolisiert.

Figur 3 zeigt die zeitliche Entwicklung der Geschwindigkeit V_{A} des Fahrzeugs A und der Geschwindigkeit V_{B} des Fahrzeugs B in einem Geschwindigkeits/Zeit-Diagramm. Zum Zeitpunkt t0 fährt das Fahrzeug A mit der vom Fahrer über die Taste 14 gewählten Richtgeschwindigkeit V_{RS}, die etwas größer ist als die Geschwindigkeit V_{B} des Fahrzeugs B. Da sich das Fahrzeug A dem Fahrzeug B annähert, wird V_{A} allmählich auf V_{B} reduziert. Zum Zeitpunkt T1 muß jedoch das Fahrzeug B stark verzögern, beispielsweise wegen eines weiter vorn befindlichen, in Figur 2 nicht gezeigten Hindernisses. Das Fahrzeug A verringert mit kleiner zeitlicher Verzögerung ebenfalls seine Geschwindigkeit, um den Abstand zum Fahrzeug B einzuhalten. Zum Zeitpunkt t2 ist die Fahrbahn vor dem Fahrzeug B wieder frei, und das Fahrzeug B beschleunigt über seine ursprüngliche Geschwindigkeit hinaus, um wieder zum fließenden Verkehr aufzuschließen. Danach läßt sich das Fahrzeug B wieder auf die ursprüngliche Geschwindigkeit zurückfallen. Auch diese Geschwindigkeitsänderungen werden von dem Fahrzeug A nachvollzogen, und dessen Geschwindigkeit liegt dabei zwischen den Zeitpunkten t3 und t4 oberhalb der ursprünglichen Richtgeschwindigkeit V_{RS}. Dies wird dadurch ermöglicht, daß durch die Folgefunktion 30 die Richtgeschwindigkeit nachgeführt wird. Wenn V_{A} wieder abnimmt, bleibt die nachgeführte Richtgeschwindigkeit auf dem Wert V_{RF}, der dem Maximum der vom Fahrzeug A bei der Verfolgung des Fahrzeugs B erreichten Geschwindigkeit entspricht (oder wahlweise auch etwas größer sein kann).

Durch die Beschleunigung des Fahrzeugs A über die ursprüngliche Richtgeschwindigkeit hinaus, schließt somit auch das Fahrzeug A automatisch zum fließenden Verkehr auf. Wenn dagegen die Folgefunktion 30 nicht aktiv wäre, so entspräche der Geschwindigkeitsverlauf des Fahrzeugs A der in Figur 3 gestrichelt eingezeichneten Kurve V_{ACC}. Das würde bedeuten, daß das Fahrzeug A wesentlich länger braucht, um das Fahrzeug C zu überholen, und der Fahrer des Fahrzeugs C würde behindert, da er nicht ausscheren kann, um das noch langsamere Fahrzeug D zu überholen. Durch die Erfindung wird so eine dem Verkehrsfluß dienende Fahrweise erreicht, ohne daß der Fahrer aktiv in das Geschehen eingreifen muß.

Um einen vergleichbaren Effekt auch ohne die Folgefunktion 30 zu erreichen, hätte der Fahrer des Fahrzeugs A von Anfang an eine wesentlich höhere Richtgeschwindigkeit wählen müssen. Er hätte dann aber auch schon zum Zeitpunkt t0 mit einer entsprechend höheren Geschwindigkeit fahren müssen.

Ein weiterer Vorteil der hier beschriebenen Ausführungsform besteht darin, daß die Richtgeschwindigkeit nicht völlig aufgehoben, sondern lediglich auf das erforderliche Maß (V_{RF}) erhöht wird und damit letztlich begrenzt und an den Verkehrsfluß angepaßt bleibt. Falls das Ortungssystem 10 das Zielobjekt verliert, führt dies deshalb nicht zu einer unerwarteten und unerwünschten Beschleunigung des Fahrzeugs A, sondern die Geschwindigkeit bleibt auf V_{RF} begrenzt. Dies ist insbesondere in Baustellenbereichen oder bei Strecken mit Geschwindigkeitsbegrenzung ein erheblicher Vorteil.

Falls das Fahrzeug B, nachdem es das Fahrzeug D überholt hat, auf die rechte Fahrspur wechselt, würde dies ebenfalls einen Zielobjektverlust bedeuten, und das Fahrzeug A würde mit der Geschwindigkeit V_{RF} weiterfahren. Als Alternative ist jedoch auch ein anderer Betriebsmodus denkbar. Da das Ortungssystem 10 ein gewisses Winkelauflösungsvermögen hat und deshalb in der Lage ist, einen Spurwechsel des Fahrzeugs B zu erkennen und die Bewegungen dieses Fahrzeugs auch bei einem Spurwechsel im Rahmen einer sogenannten Tracking-Prozedur zu verfolgen, kann die Folgefunktion 30 auch so ausgestaltet sein, daß das Fahrzeug B trotz des Spurwechsels als Zielobjekt ausgewählt bleibt. Die Geschwindigkeit V_{A} bliebe dann an die Geschwindigkeit des Fahrzeugs B angepaßt, was besonders dann von Vorteil ist, wenn der Fahrer des Fahrzeugs A beabsichtigt, seinerseits auf die rechte Spur zu wechseln, nachdem er das Fahrzeug D überholt hat.

Zweckmäßigerweise bleibt im Regler 12 die ursprünglich mit der Taste 14 gesetzte Richtgeschwindigkeit V_{RS} gespeichert. Durch Betätigung der Taste 18 zu irgendeinem Zeitpunkt nach t3 kann der Fahrer dann die ursprüngliche Richtgeschwindigkeit V_{RS} wiederherstellen.

Die Betätigung der Taste 16 hat auch dann, wenn die Folgefunktion 30 aktiv ist, den Effekt, daß die Regelung ganz ausgesetzt wird und der Fahrer die Geschwindigkeit selbst mit dem Gaspedal kontrollieren muß. Die anschließende Betätigung der Taste 18 (Resume) hat dann je nach Ausführungsform zur Folge, daß entweder auf die ursprüngliche Richtgeschwindigkeit V_{RS} oder auf die nachgeführte Richtgeschwindigkeit V_{RF} geregelt wird.

Die Tasten 20 und 22 sollten bei aktiver Folgefunktion 30 zweckmäßigerweise auf die nachgeführte Richtgeschwindigkeit V_{RF} wirken. In diesem Fall kann der Fahrer die ursprüngliche Richtgeschwindigkeit V_{RS} auch durch Betätigung der Taste 22 wiederherstellen.

Wenn der Fahrer die Folgefunktion 30 deaktivieren will, kann dies z.B. durch einmalige Betätigung der Taste 14 geschehen, mit dem Effekt, daß die augeblickliche Geschwindigkeit als neue Richtgeschwindigkeit gespeichert wird.

## Patentansprüche

1. Vorrichtung zur adaptiven Geschwindigkeitsregelung für Kraftfahrzeuge, mit einem Ortungssystem (10) zur Ortung vorausfahrender Fahrzeuge (3) und einem Regler (12) zur Regelung der Geschwindigkeit auf vom Fahrer vorgebbare Richtgeschwindigkeit (V_{RS})falls kein vorherfahrendes Fahrzeug erkannt wurde und auf einen Sollabstand zu einem vorausfahrenden Fahrzeug (B) falls ein vorherfahrendes Fahrzeug festgestellt wurde, wobei die Umschaltung zwischen der Regelung auf eine Richtgeschwindigkeit und der Regelung auf einen Sollabstand automatisch durch den Regler durchgeführt wird, **gekennzeichnet durch** eine fahreraktivierbare Folgefunktion (30), in der das vorausfahrende Fahrzeug (B) auch bei Überschreitung der Richtgeschwindigkeit (V_{RS}) verfolgt wird.

2. Vorrichtung nach Anspruch 1, **dadurch gekennzeichnet, dass** die Folgefunktion (30) dazu ausgebildet ist, die Richtgeschwindigkeit (V_{RS}) in dem Masse auf einen neuen Wert (V_{RF}) nachzuführen, wie es zur Einhaltung des Sollabstands zu dem vorausfahrenden Fahrzeug (B) erforderlich ist.

3. Vorrichtung nach Anspruch 2, **dadurch gekennzeichnet, dass** der Regler (12) dazu ausgebildet ist, die ursprünglich vom Fahrer gewählte Richtgeschwindigkeit (V_{RS}) zu speichern, und dass eine Bedienungseinrichtung (18) dazu vorgesehen ist, die nachgeführte Richtgeschwindigkeit (V_{RS}) wieder auf die ursprüngliche Richtgeschwindigkeit (V_{RS}) zurückzusetzen.

4. Vorrichtung nach einem der vorstehenden Ansprüche, **dadurch gekennzeichnet, dass** das Ortungssystem (10) und der Regler (12) dazu ausgebildet sind, jeweils das unmittelbar auf der eigenen Spur vorausfahrende Fahrzeug (B) als Zielobjekt für die Regelung auf den Sollabstand auszuwählen, und dass die Folgefunktion (30) auch bei einem Wechsel des Zielobjektes aktiv bleibt.

5. Vorrichtung nach einem der Ansprüche 1 bis 3, **dadurch gekennzeichnet, dass** das Ortungssystem (10) dazu ausgebildet ist, auch Fahrzeuge auf Nebenspuren zu orten, dass im Regler (12) eine Trackingfunktion implementiert ist, die es gestattet, die Bewegungen des als Zielobjekt ausgewählten vorausfahrenden Fahrzeugs (B) auch bei einem Spurwechsel dieses Fahrzeugs (B) oder des eigenen Fahrzeugs (A) zu verfolgen, und dass in der Folgefunktion auch bei einem Spurwechsel das bisherige Zielobjekt weiter verfolgt wird.

6. Vorrichtung nach einem der vorstehenden Ansprüche, **dadurch gekennzeichnet, dass** die Folgefunktion (30) auch bei Geschwindigkeiten unterhalb von 40 km/h aktivierbar ist.

7. Vorrichtung nach einem der vorstehenden Ansprüche, **gekennzeichnet durch** eine Anzeigeeinrichtung (24) zur Anzeige der jeweils gültigen Richtgeschwindigkeit (V_{RS}, V_{RF}).

8. Vorrichtung nach einem der vorstehenden Ansprüche, **gekennzeichnet durch** eine Anzeigeeinrichtung (28) zur Anzeige des aktiven oder inaktiven Zustands der Folgefunktion (30).

9. Vorrichtung nach einem der vorstehenden Ansprüche, **gekennzeichnet durch** eine Anzeigeeinrichtung (26) zur Anzeige eines Zustands, in dem ein vorausfahrendes Fahrzeug (B) als Zielobjekt für die Regelung auf den Sollabstand ausgewählt ist.

## Claims

1. Device for adaptive cruise control for motor vehicles, having a locating system (10) for locating vehicles (3) travelling ahead and a regulator (12) for regulating the speed to a guide speed (V_{RS}) which can be predefined by the driver if no vehicle travelling ahead has been detected and to a set-point distance from a vehicle (B) travelling ahead if a vehicle travelling ahead has been detected, wherein the switching over between the regulation to a guide speed and the regulation to a set-point distance is carried out automatically by the regulator, **characterized by** a tracking function (30) which can be activated by the driver and in which the vehicle (B) which is travelling ahead is tracked even if the guide speed (V_{RS}) is exceeded.

2. Device according to Claim 1, **characterized in that** the tracking function (30) is designed to adjust the guide speed (V_{RS}) to a new value (V_{RF}) to the extent necessary to maintain the set-point distance from the vehicle (B) travelling ahead.

3. Device according to Claim 2, **characterized in that** the regulator (12) is designed to store the guide speed (V_{RS}) which was originally selected by the driver, and **in that** an operator control device (18) is provided for resetting the adjusted guide speed (V_{RS}) back to the original guide speed (V_{RS}).

4. Device according to one of the preceding claims, **characterized in that** the locating system (10) and the regulator (12) are designed to select in each case the vehicle (B) which is travelling directly ahead on the same lane as a target object for the regulation to the set-point distance, and **in that** the tracking function (30) remains active even when the target object changes.

5. Device according to one of Claims 1 to 3, **characterized in that** the locating system (10) is designed also to locate vehicles on adjacent lanes, **in that** a tracking function is implemented in the regulator (12), said function permitting the movements of the vehicle (B) which is travelling ahead and has been selected as the target object to be tracked even when this vehicle (B) changes lane or the driver's own vehicle (A) changes lane, and **in that** in the tracking function the previous target object continues to be tracked even when there is a change of lane.

6. Device according to one of the preceding claims, **characterized in that** the tracking function (30) can be activated even at speeds below 40 km/h.

7. Device according to one of the preceding claims, **characterized by** a display device (24) for displaying the respectively valid guide speed (V_{RS}, U_{RF}).

8. Device according to one of the preceding claims, **characterized by** a display device (28) for displaying the active or inactive state of the tracking function (30).

9. Device according to one of the preceding claims, **characterized by** a display device (26) for displaying a state in which a vehicle (B) which is travelling ahead is selected as a target object for the regulation to the set-point distance.

## Revendications

1. Dispositif de régulation adaptative de la vitesse de véhicule automobile comportant un système de localisation (10) pour localiser des véhicules (3) qui précèdent ainsi qu'un régulateur (12) pour réguler la vitesse, sur la vitesse de consigne (V_{RS}) prédéfinie par le conducteur si aucun véhicule n'est détecté en amont et sur une distance de consigne par rapport à un véhicule (B) en amont, s'il a été constaté un véhicule en amont, la commutation se faisant entre la régulation sur une vitesse directrice et la régulation sur une distance de consigne, automatiquement par le régulateur,
**caractérisé par**
une fonction de poursuite (30) activée par le conducteur qui fait suivre le véhicule (B) qui précède même en cas de dépassement de la vitesse directrice (V_{RS}).

2. Dispositif selon la revendication 1,
**caractérisé en ce que**
la fonction de poursuite (30) est réalisée pour asservir la vitesse directrice (V_{RS}) sur une nouvelle valeur (V_{RF}) dans la mesure où cela est nécessaire pour maintenir la distance de consigne par rapport au véhicule (B) qui précède.

3. Dispositif selon la revendication 2,
**caractérisé en ce que**
le régulateur (12) est réalisé pour mémoriser la vitesse directrice (V_{RS}) sélectionnée à l'origine par le conducteur et
une installation de commande (18) remet de nouveau la vitesse directrice asservie (V_{RS}) sur la vitesse directrice d'origine (V_{RS}).

4. Dispositif selon l'une des revendications précédentes,
**caractérisé en ce que**
le système de localisation (10) et le régulateur (12) sont réalisés pour que le véhicule (B) qui précède directement sur la voie propre du véhicule soit choisi comme objet cible pour la régulation sur la distance de consigne et la fonction de poursuite (30) reste activée même en cas de changement d'objet cible.

5. Dispositif selon l'une des revendications 1 à 3,
**caractérisé en ce que**
le système de localisation (10) est réalisé pour localiser également des véhicules sur les voies voisines de façon à implémenter une fonction de traçage dans le régulateur (12) permettant de sélectionner les mouvements du véhicule (B) en amont, choisi comme objet cible, même en cas de changement de voie par ce véhicule (B) ou du propre véhicule (A) et dans la fonction de poursuite, on poursuit l'actuel objet cible, même en cas de changement de voie.

6. Dispositif selon l'une des revendications précédentes,
**caractérisé en ce que**
la fonction de poursuite (30) est également activée pour des vitesses inférieures à 40 km/h.

7. Dispositif selon l'une des revendications précédentes,
**caractérisé par**
une installation d'affichage (24) pour indiquer la vitesse directrice respectivement valable (V_{RS}, V_{RF}).

8. Dispositif selon l'une quelconque des revendications précédentes,
**caractérisé par**
une installation d'affichage (28) pour afficher l'état activé ou inactivé de la fonction de poursuite (30).

9. Dispositif selon l'une des revendications précédentes,
**caractérisé par**
une installation d'affichage (26) pour afficher un état dans lequel un véhicule (B) en amont est sélectionné comme objet cible pour la régulation en fonction de la distance de consigne.
